# EUROPEAN PATENT APPLICATION

(11) **EP 1 785 707 A2**
(43) Date of publication of application: **16.05.2007**
(21) Application number: 06023686.6
(22) Date of filing: 14.11.2006
(51) Int. Cl.: G01L 1/24, G01B 11/16

(54) **Optical fiber impulse sensor**

(30) Priority: 15.11.2005 JP 2005329685
(71) Applicant: HITACHI CABLE, LTD., Chiyoda-ku Tokyo (JP); DENSO CORPORATION, Kariya-shi, Aichi-ken (JP)
(72) Inventor: Abe, Tomiya, Chiyoda-ku Tokyo (JP); Aoyama, Takashi, Chiyoda-ku Tokyo (JP); Hishida, Yasuyuki, Chiyoda-ku Tokyo (JP); Yamamoto, Satoshi, Chiyoda-ku Tokyo (JP); Kobayashi, Shigenori, Kariya-City Aichi (JP); Suzuki, Akira, Kariya-City Aichi (JP); Takahashi, Hiroyuki, Toyota-shi Aichi (JP)
(74) Representative: Goddar, Heinz J.

(57) **Abstract**

An optical fiber impulse sensor passes light through an optical fiber and senses an impulse from an optical loss variation based on deformation of the optical fiber caused by the impulse. The sensor has: the optical fiber formed of a synthetic resin, a sheet member having a protrusion and disposed along a longitudinal direction of the optical fiber; and an elastic structure that covers a periphery of the optical fiber and the sheet member, and has a E(**70**)/E(**-30**) ratio of a storage elastic modulus E(**70**) at **70°**C thereof to a storage elastic modulus E(**-30**) at -**30°**C thereof of **0.75** to **1.3.**

## Description

The present application is based on Japanese patent application No.2005-329685, the entire contents of which are incorporated herein by reference.

### BACKGROUND OF THE INVENTION

### 1. FIELD OF THE INVENTION

This invention relates to an optical fiber impulse sensor to detect an impulse applied.

### 2. DESCRIPTION OF THE RELATED ART

In conventional impulse sensors, an electrical impulse sensor generally uses one of a pressure sensor, an acceleration sensor and a strain gauge to detect a pressure, acceleration and strain, respectively, caused by an impulse.

An optical fiber impulse sensor is operable to detect an impulse such that the impulse such as pressure, acceleration and strain is applied to an optical fiber made of quartz or plastic, causes a bend loss and a compression loss due to deformation of the optical fiber by the impulse, and thereby varies light quantity in the optical fiber.

The optical fiber impulse sensor is generally installed and operated such that an optical fiber is helically wound around a soft cylinder, and allows detection of an increase in optical transmission loss caused by a decrease of bend radius of the optical fiber when the cylinder is deformed by an impulse of collision. The related arts are JP-A-9-26370, JP-A-5-249352, and JP-A-2002-531812.

In the above prior-art electrical impulse sensor, however, there is the problem that the sensor itself for sensing an impulse via an electrical signal is susceptible to electromagnetic noise, and causes difficulty in distinguishing between a detection signal and a noise.

There is also the problem that the transmission path for transmitting the detection signal is unignorably susceptible to the electromagnetic noise from outside.

There is also the problem that the electrical signal in the transmission path may have a large transmission loss.

In case of the optical fiber impulse sensor using a quartz glass optical fiber, there is the problem that there is a possibility of the quartz glass optical fiber being broken when an impulse is applied because bend and compression of the quartz glass optical fiber causes mechanical strength deterioration thereof.

On the other hand, in case of a synthetic resin optical fiber, although the possibility being broken by bend and compression is low, there is also the problem that because of its strong rigidity, optical transmission loss is less likely to be caused by bend and compression, leading to a lack of sensor accuracy.

In view of the above, an optical fiber impulse sensor is desired that has high sensor accuracy even when using the synthetic resin optical fiber.

However, there is also the problem that using elastic structure as a member in a sensor causes a variation in sensor sensitivity because the elastic modulus varies according to temperatures.

### SUMMARY OF THE INVENTION

Accordingly, it is an object of this invention to provide an optical fiber impulse sensor that has high sensor accuracy and little sensitivity variation according to temperatures, even when using the synthetic resin optical fiber.

According to the invention, an optical fiber impulse sensor, which passes light through an optical fiber and senses an impulse from an optical loss variation based on deformation of the optical fiber caused by the impulse, comprises:
the optical fiber formed of a synthetic resin,
a sheet member comprising a protrusion and disposed along a longitudinal direction of the optical fiber; and
an elastic structure that covers a periphery of the optical fiber and the sheet member, and comprises a E(**70**) /E(**-30**) ratio of a storage elastic modulus E(**70**) at **70**°C thereof to a storage elastic modulus E(**-30**) at **-30**°C thereof of **0.75** to **1.3.**

In the above invention, the following modifications and changes can be made.
(i) The elastic structure comprises any one or a mixture of a raw rubber and a synthetic rubber.
(ii) The elastic structure comprises a silicone rubber.
(iii) The elastic structure comprises a hole, and the optical fiber is inserted into the hole.
(iv) The hole is sealed at both ends of the elastic structure.
(v) The protrusion of the sheet member is in contact with the optical fiber.

### <Advantages of the invention>

According to the invention, it is possible to provide an optical fiber impulse sensor that has high sensor accuracy and little sensitivity variation according to temperatures, even when using the synthetic resin optical fiber.

### BRIEF DESCRIPTION OF THE DRAWINGS

The preferred embodiments according to the invention will be explained below referring to the drawings, wherein:
**FIG.1** is a cross-sectional view showing an optical fiber impulse sensor;
**FIG.2** is a cross-sectional view along line **A-A** of the optical fiber impulse sensor shown in **FIG.1;**
**FIG.3** is a cross-sectional view showing a state of the optical fiber impulse sensor when receiving an impulse;
**FIG.4** is a diagram showing a variation with time of impulse sensing acquired by a load cell;
**FIG.5** is a diagram showing a variation with time of optical loss in light quantity passed through the optical fiber impulse sensor when receiving an impulse;
**FIG.6** is a correlation graph of the elastic modulus ratio versus the sensitivity ratio;
**FIG.7** is a correlation graph of the elastic modulus ratio at -30°C versus the sensitivity at -**30**°C; and
**FIG.8** is a correlation graph of the elastic modulus ratio at 70°C versus the sensitivity at **70**°C.

### DETAILED DESCRIPTION OF THE PREFERRED EMBODIMENTS

### Optical fiber impulse sensor structure

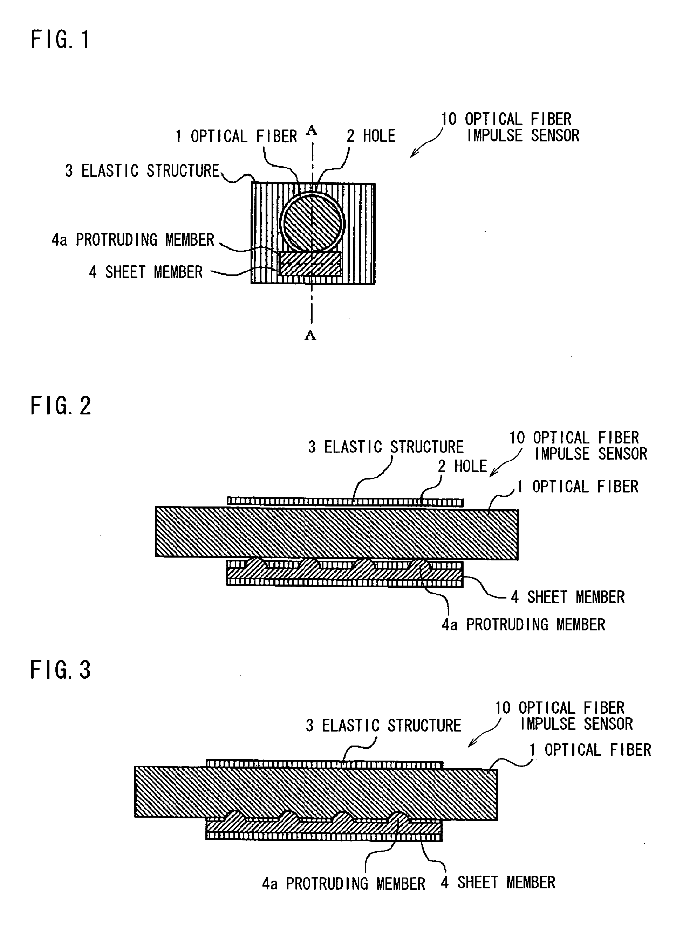

**FIG.1** is a cross-sectional view showing an optical fiber impulse sensor **10** in the preferred embodiment of the present invention.

The optical fiber impulse sensor 10 as shown, is for sensing, as an impulse, a variation of optical loss due to deformation of a synthetic resin optical fiber 1 when light is passed through the optical fiber 1 and the impulse is applied thereto. The optical fiber impulse sensor 10 comprises a sheet member 4 with uneven surface formed on one side, the synthetic resin optical fiber 1 disposed along the sheet member 4 so that the optical fiber 1 abuts protruding portions of the sheet member 4, and an elastic structure 3 for covering these synthetic resin optical fiber 1 and sheet member 4, wherein the synthetic resin optical fiber 1 is deformed by the aforementioned protruding portions when an impulse is applied to the elastic structure 3.

### Sheet member

The uneven surface of the sheet member 4 is realized by forming protruding members **4a** at constant pitches in the longitudinal direction of the sheet member 4. That is, when an impulse is applied to the optical fiber impulse sensor 10, the synthetic resin optical fiber 1 is deformed according to the impulse by the protruding members **4a.**

FIG.2 is a cross-sectional view along line A-A of the optical fiber impulse sensor **10** shown in **FIG.1.**

The optical fiber impulse sensor 10 has the protruding members **4a** formed at constant pitches longitudinally in the sheet member 4 laid within the elastic structure 3, and provided in the longitudinal direction of the elastic structure 3 so that the optical fiber 1 abuts the protruding portions formed of the protruding members **4a.**

### Synthetic resin optical fiber

The synthetic resin optical fiber 1 is an impulse-sensing optical fiber comprising a high refractive index fiber core, and low refractive index fiber cladding provided around the fiber core.

The fiber core is formed of a core material such as a cross-linked acryl resin (thermosetting acryl resin), a silicone resin, etc. and the fiber cladding is formed of a cladding material such as a moisture-impermeable fluororesin, etc.

For example, in this embodiment, the outside diameter of the fiber core is φ **1.5** mm, and the outside diameter of the fiber cladding is φ **2.2** mm, and the fiber core is formed of a cross-linked acryl resin.

The sheet member 4 is formed in a thin long sheet shape using a rigid material such as hard plastic, brass (BS), stainless steel (SUS), etc. For example, in this embodiment, the sheet member 4 is formed of stainless SUS304.

The protruding members **4a** are formed in a semi-columnar shape using a rigid material such as hard plastic, brass (BS), stainless steel (SUS), etc., and are provided at constant pitches in the longitudinal direction of the sheet member 4 so that the rectangular plane is laid on the upper surface of the sheet member 4 and that the longitudinal direction of the column is perpendicular to the longitudinal direction of the sheet member 4.

For example, in this embodiment, the protruding members **4a** are formed of stainless SUS**304.** In this case, the Young modulus of the protruding members **4a** is 200 GPa at 20°C.

The protruding members **4a** may be formed integrally with the sheet member **4.** For example, **1.8** mm diameter semi-columnar protruding members **4a** are provided at **20** mm pitches in the longitudinal direction of the sheet member **4.**

Also, the sheet member with uneven surface is that having a plurality of holes formed at specified pitches longitudinally in the rectangular sheet member.

### Elastic structure

The material of the elastic structure **3** uses raw rubber, synthetic rubber, or the like, for example. Among others, silicone rubber, which is synthetic rubber, has the property of small variation with temperature of elastic modulus, and is therefore desirable as the material of the elastic structure **3.** From the point of view of storage elastic modulus that is one of quantities expressing dynamic viscoelasticity of the elastic structure **3**, it is desirable that the ratio of storage elastic modulus at **70**°C (E(**70**)) to storage elastic modulus at -30°C (E(-30)) of the elastic structure **3**, E(**70**)/E(-**30**) be **0.75-1.3.**

The applicants discovered that the sensitivity of the elastic modulus of the optical fiber impulse sensor **1**0 depends on the elastic modulus of the elastic structure **3,** and that it is therefore important to properly determine the elastic modulus. It is well known that the elastic modulus of polymeric materials generally varies significantly according to temperatures. Use at a constant temperature causes no problem in spite of the dependence of the elastic modulus on the temperature. However, there arises the problem that installing the sensor using a polymeric material in a machine used outdoors such as an automobile causes environmental temperature-dependent variations in the sensitivity of the sensor due to exposure to external environment with a large difference between high and low temperatures.

Thus, the applicants studied the elastic material used in the elastic structure **3,** and discovered that the sensitivity variations caused by temperature variations are lessened by using as the elastic structure **3** a material whose ratio E(**70**)/E(-**30**) is in the range of **0.75-1.3.** A ratio E(**70**)/E(-**30**) less than **0.75** makes the high-temperature sensitivity high compared to the low-temperature sensitivity, while a ratio E(**70**)/E(-**30**) exceeding **1.3** makes the high-temperature sensitivity low compared to the low-temperature sensitivity. An attempt to compensate such sensitivity variations by a temperature correction function or the like causes an additional function therefor to be added to the sensor, and therefore leads to an increase in cost. In contrast, setting the ratio E(**70**)/E(-**30**) at a desired value can be realized if the material is selected properly, and no additional function is required to be added to the sensor, and therefore leads to no increase in cost.

The storage elastic moduli E(-**30**) and E(**70**) can be derived from tensile elastic modulus of rising temperature rate **10**°C/min and frequency **10** Hz.

As shown in **FIGS. 1** and **2,** the elastic structure **3** is formed in a thin long stick shape, and is longitudinally provided with a hole **2** whose diameter is larger than a fiber cladding diameter of the synthetic resin optical fiber **1,** and the sheet member **4** is buried along the hole **2** in the elastic structure **3.**

Also, the synthetic resin optical fiber **1** is inserted in the hole **2,** and after the insertion of the synthetic resin optical fiber **1,** to prevent water or the like from entering the hole **2,** both ends of the hole **2** are sealed.

The material of the elastic structure **3** uses raw rubber, synthetic rubber, or the like, for example. As typical examples of synthetic rubber, there are silicone rubber, ethylene-propylene rubber, etc.

As illustrated, the optical fiber impulse sensor **10** has the structure in which the synthetic resin optical fiber **1** with outside diameter φ **2.2** mm is inserted through the hole **2** cut in the elastic structure **3.**

### Optical fiber impulse sensor manufacturing method

Next, there is explained a manufacturing method of the optical fiber impulse sensor **10.**

First, a stainless stick with outside diameter φ **2.4** mm, for example, is prepared that is a stick rigid body to form the hole **2** in the elastic structure **3.** A mold is also prepared to mold synthetic rubber for elastic structure **3** material to form the elastic structure **3.** This mold is in a hollow stick shape, and the elastic structure **3** formed by this mold is circular, rectangular, or the like in its cross-section.

On the other hand, the sheet member **4** and the protruding members **4a** are formed integrally with each other, using rigid body material such as stainless, for example.

Subsequently, the stainless stick is caused to abut the protruding members **4a** provided in the sheet member **4** and is arranged longitudinally parallel with the sheet member **4.** Using a mold, the sheet member **4** and the stainless stick are covered with synthetic rubber elastomer, and the synthetic rubber is heated and molded to form a rubber mold for the elastic structure **3.**

The stainless stick is then pulled and removed from this rubber mold, to form the hole **2** in the rubber mold. This results in the hole **2** for synthetic resin optical fiber **1** insertion, and in the elastic structure **3** with the sheet member **4** buried therein.

Finally, a synthetic resin optical fiber **1** is inserted through the hole **2** of the elastic structure **3,** and both ends of the hole **2** of the elastic structure 3 are sealed, which results in the optical fiber impulse sensor **10.**

In this manner, the sheet member **4** and the stainless stick are covered with the synthetic rubber, and the stainless stick is then pulled and removed to form the hole **2,** followed by insertion of the synthetic resin optical fiber **1** through the hole **2** of the elastic structure **3** to fabricate the optical fiber impulse sensor **10,** which thereby allows the synthetic resin optical fiber **1** to be mounted in the elastic structure **3** without being heated even though the synthetic rubber is heated, and which therefore prevents the synthetic resin optical fiber **1** from being varied or degraded in properties by synthetic rubber heating.

It is also advantageous that forming the hole **2** in the elastic structure **3** using the stainless stick and then inserting the fiber **1** through the hole **2** provides good accuracy not only for positioning the hole **2** during the rubber molding because of the rigidity of the stainless stick in comparison with the fiber **1,** but also for housing the fiber **1** and sheet member **4** in the elastic structure **3** after the fiber **1** inserting.

On the other hand, molding rubber directly to the fiber **1** tends to cause the fiber **1** to become buckled or bent by rubber flow and stress during the molding, and provide poor accuracy for positioning the fiber **1** in the rubber mold.

Also, causing the protruding members 4a provided on the surface of the sheet member **4** to abut the outside diameter surface (lower portion of the peripheral surface) of the synthetic resin optical fiber **1** causes the fiber **1** to be deformed and concentratedly stressed at this abutted portion when receiving an impulse.

Further, both ends of the elastic structure **3** sealed allows preventing water or the like from entering the hole **2** of the optical fiber impulse sensor **10,** which results in the optical fiber impulse sensor **10** having few errors.

Next, impulse sensing by this optical fiber impulse sensor 10 is explained by referring to **FIGS.1-3.**

To one end of the synthetic resin optical fiber **1** of the optical fiber impulse sensor **10** is connected a light-emitting diode (not shown), for example, which emits constant wavelength light as a light source. Light emitted is injected into the synthetic resin optical fiber **1.** To the other end of the synthetic resin optical fiber **1** is connected a photodiode (not shown), for example, as a light-receiving element. Light quantity transmitted through the synthetic resin optical fiber **1** is sensed by the photodiode, and a variation in the light quantity is detected, thereby allowing an impulse applied to the optical fiber impulse sensor **10** to be sensed.

The light-emitting diode typically uses a **660** nm wavelength light-emitting diode.

**FIGS.1** and **2** show a state of before the optical fiber impulse sensor **10** receives an impulse.

In the state of not receiving an impulse, the synthetic resin optical fiber **1** does not receive any stress, and therefore has few strains caused.

Let us suppose that this optical fiber impulse sensor **10** receives an impulse from above in the figure. **FIG.3** shows a state of the optical fiber impulse sensor **10** when receiving an impulse.

The impulse applied to the optical fiber impulse sensor **1**0 is a pressing force applied in the diametrical direction of the synthetic resin optical fiber **1,** which causes the lower portion of the synthetic resin optical fiber **1** to abut the protruding members **4a** at predetermined pitches, and which therefore causes the protruding members **4a** to deform the synthetic resin optical fiber **1** at the areas respectively abutting the protruding members **4a** based on the impulse. This has the local strain effect of causing the synthetic resin optical fiber **1** to become strained and bent at the protruding members **4a,** therefore leading to a large transmission loss (optical loss) in the synthetic resin optical fiber **1.**

Specifically, when the optical fiber impulse sensor **10** receives an impulse downwardly from above in the figure, the synthetic resin optical fiber **1** is most effectively concentratedly stressed at the portions respectively abutting the protruding members **4a,** and strain caused in the fiber core and fiber cladding forming the synthetic resin optical fiber **1** causes an increase in transmission loss (optical loss) of the synthetic resin optical fiber **1.** The increase of this transmission loss causes a decrease in light quantity passing through the synthetic resin optical fiber **1.**

Because this transmission loss is related to the magnitude of the impulse applied to the optical fiber impulse sensor **1**0, by measuring variation with time of the transmission loss, the magnitude of the impulse, the length of time of receiving the impulse, etc. can be sensed.

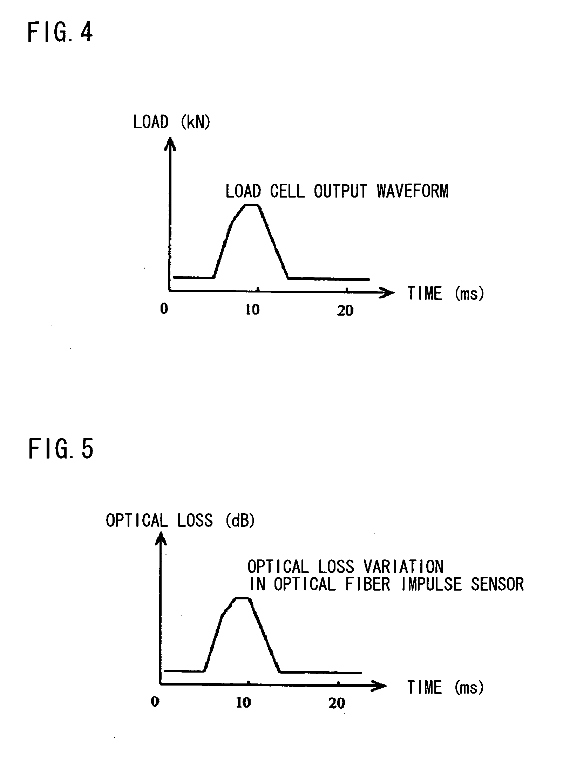

**FIG.4** shows a variation with time of impulse sensed by a conventional impulse sensor load cell. In **FIG.4,** the horizontal axis represents time (unit: ms), and the vertical axis represents load (unit: kN) received by the load cell.

As seen from the figure, when no impulse is applied, almost no load acts on the load cell, whereas when an impulse is applied, the load acting on the load cell increases to the maximum load received in approximately **10** ms, and subsequently decreases to the state of before the impulse receiving.

**FIG.5** shows a variation in optical loss of the synthetic resin optical fiber **1** when the same impulse as in the load cell is applied to the optical fiber impulse sensor **10** of the present embodiment. In **FIG.5,** the horizontal axis represents time (unit:ms), and the vertical axis represents optical loss (unit: dB) of the optical fiber impulse sensor **10.**

As seen from the figure, when no impulse is applied, the optical loss of the optical fiber impulse sensor **10** is small, whereas when an impulse is applied, the optical loss of the optical fiber impulse sensor **10** increases to the maximum optical loss in approximately **10** ms, and subsequently decreases to the state of before the impulse receiving.

From the comparison of the variations with time of **FIGS. 4** and **5,** it is found that both the variations with time are substantially similar to each other.

This means that the optical fiber impulse sensor **1**0 is as effective in impulse sensing as the conventional impulse sensor (load cell).

That is, the variation with time of the optical loss of the optical fiber impulse sensor **10** has the pattern similar to the output varying with time of the load cell, and the degree of the optical loss of the optical fiber impulse sensor **10** corresponds to the degree of the impulse received by the object to be measured.

In this manner, it is verified that an impulse can appropriately be sensed by applying the impulse load to the optical fiber impulse sensor **10** and sharply increasing transmission loss (optical loss) in the synthetic resin optical fiber **1.**

Because the above-explained optical fiber impulse sensor **1**0 senses an impulse received by an optical loss variation through the synthetic resin optical fiber **1,** it can sense the impulse without being affected by electromagnetic noise caused or received in the optical fiber impulse sensor **10**-installed location.

Also, in comparison to an impulse sensor using a quartz glass fiber, the optical fiber impulse sensor **10** according to the present invention is unlikely to cause the synthetic resin optical fiber **1** to be broken due to fatigue by bend and compression, and is therefore highly reliable. Further, the problem that the synthetic resin optical fiber is unlikely to cause optical transmission loss by bend and compression and lacks sensor accuracy, is overcome by the protruding members **4a** provided in the sheet member **4** deforming the synthetic resin optical fiber **1.**

Also, because the synthetic resin optical fiber **1** is inserted through the hole **2** of the elastic structure **3** so that the fiber **1** and the hole **2** are not entirely in close contact, no strain due to pressure other than the impulse to the optical fiber sensor is likely to occur and affect the optical fiber sensor, and the impulse sensor is therefore highly sensitive only to the impulse.

Further, because the optical fiber impulse sensor **10** is fabricated without directly heating the synthetic resin optical fiber **1,** the fiber **1** causes no property variation due to heat. Also, because degradation is prevented, the sensor allows good accuracy of variation in optical loss of the fiber **1** when receiving the impulse.

The synthetic resin optical fiber **1** using a cross-linked acryl resin as the fiber core and a moisture-impermeable fluororesin as the cladding material is not only unaffected by electromagnetic noise, but also humidity-resistant.
Furthermore, by sealing the elastic structure at both its ends to prevent penetration of water, the good optical fiber impulse sensor **10** can be realized.

Because the above-explained optical fiber impulse sensor **10** uses the elastic structure **3** with the ratio E(**70**) /E(-**30**) of dynamic viscoelasticity ranging **0.75-1.3,** it is advantageous that the above-explained optical fiber impulse sensor **10** has the impulse sensing sensitivity unlikely to be temperature-dependent, and is suitable for outdoor use.

### Examples

The following examples **1-6** and comparison examples **1-3** are prepared that have the same structure as the optical fiber impulse sensor **10** of **FIG.1.** The sensitivity of each example is measured and evaluated.

### Example 1

In the optical fiber impulse sensor **10** of **FIG.1,** used as the elastic structure 3 is rubber with the storage elastic modulus at **-30°C** of E(**-30**) = **2.6** MPa, storage elastic modulus at **70°C** of E(**70**) = **2.7** MPa, and elastic modulus ratio of E(**70)**/E(-**30**) = **1.0.** The sensitivity (optical fiber transmission loss / weight) of this optical fiber impulse sensor **10** is **1.0** at -30°C, and **1.0** at 70°C. It is verified that there is little sensitivity variation due to temperature variations.

### Example 2

Used as the elastic structure **3** is rubber with the storage elastic modulus at **-30°C** of E(-**30**) = **4.3** MPa, storage elastic modulus at **70°C** of E(**70**) = **4.1** MPa, and elastic modulus ratio of E(**70**)/E(-**30**) = **0.95.** The sensitivity (optical fiber transmission loss / weight) of this optical fiber sensor of Example **2** is **0.80** at -**30**°C, and **0.75** at **70**°C**.** It is verified that there is little sensitivity variation due to temperature variations.

### Example 3

Used as the elastic structure **3** is rubber with the storage elastic modulus at **-30°C** of E(**-30**) = **1.2** MPa, storage elastic modulus at **70°C** of E(**70**) = **1.1** MPa, and elastic modulus ratio of E(**70**)/E(-**30**) = **0.92.** The sensitivity (optical fiber transmission loss / weight) of this optical fiber sensor of Example **3** is **1.5** at -**30**°C, and **1.8** at **70**°C. It is verified that there is little sensitivity variation due to temperature variations.

### Example 4

Used as the elastic structure **3** is rubber with the storage elastic modulus at **-30**°C of E(**-30**) = **2.4** MPa, storage elastic modulus at **70°C** of E(**70**) = **3.0** MPa, and elastic modulus ratio of E(**70**)/E(**-30**) = **1.3.** The sensitivity (optical fiber transmission loss / weight) of this optical fiber sensor of Example **4** is **1.1** at -**30**°C, and **0.85** at **70**°C. It is verified that there is little sensitivity variation due to temperature variations.

### Example 5

Used as the elastic structure **3** is rubber with the storage elastic modulus at -**30**°C of E(-**30**) = **3.2** MPa, storage elastic modulus at **70**°C of E(**70**) = **2.4** MPa, and elastic modulus ratio of E(**70)**/E(-**30**) = **0.75**. The sensitivity (optical fiber transmission loss / weight) of this optical fiber sensor of Example **5** is **0.90** at -**30**°C, and **1.0** at **70**°C. It is verified that there is little sensitivity variation due to temperature variations.

### Example 6

Used as the elastic structure **3** is rubber with the storage elastic modulus at -**30**°C of E(**-30**) = **3.1** MPa, storage elastic modulus at **70**°C of E(**70**) = **3.4** MPa, and elastic modulus ratio of E(**70**)/E(-**30**) = **1.1.** The sensitivity (optical fiber transmission loss / weight) of this optical fiber sensor of Example **6** is **0.95** at **-30**°C, and **0.92** at **70**°C. It is verified that there is little sensitivity variation due to temperature variations.

### Comparison example 1

Used as the elastic structure **3** is rubber with the storage elastic modulus at -**30**°C of E(-**30**) = **10** MPa, storage elastic modulus at **70**°C of E(**70**) = **6.0** MPa, and elastic modulus ratio of E(**70**)/E(-**30**) = **0.6**. The sensitivity (optical fiber transmission loss / weight) of this optical fiber sensor of Comparison example **1** is **0.070** at -**30**°C, and **0.33** at **70**°C. It is a problem that there is the large sensitivity variation due to temperature variations.

### Comparison example 2

Used as the elastic structure **3** is rubber with the storage elastic modulus at **-30**°C of E(-**30**) = **5.8** MPa, storage elastic modulus at **70**°C of E(**70**) = **2.9** MPa, and elastic modulus ratio of E(**70**)/E(-**30**) = **0.5**. The sensitivity (optical fiber transmission loss / weight) of this optical fiber sensor of Comparison example **2** is **0.15** at -**30**°C, and **0.95** at **70**°C. It is a problem that there is the large sensitivity variation due to temperature variations.

### Comparison example 3

Used as the elastic structure **3** is rubber with the storage elastic modulus at -**30**°C of E(-**30**) = **2.0** MPa, storage elastic modulus at **70**°C of E(**70**) = **3.1** MPa, and elastic modulus ratio of E(**70)**/E(**-30**) = **1.6**. The sensitivity (optical fiber transmission loss / weight) of this optical fiber sensor of Comparison example **3** is **1.3** at -**30**°C, and **0.85** at **70**°C. It is a problem that there is the large sensitivity variation due to temperature variations.

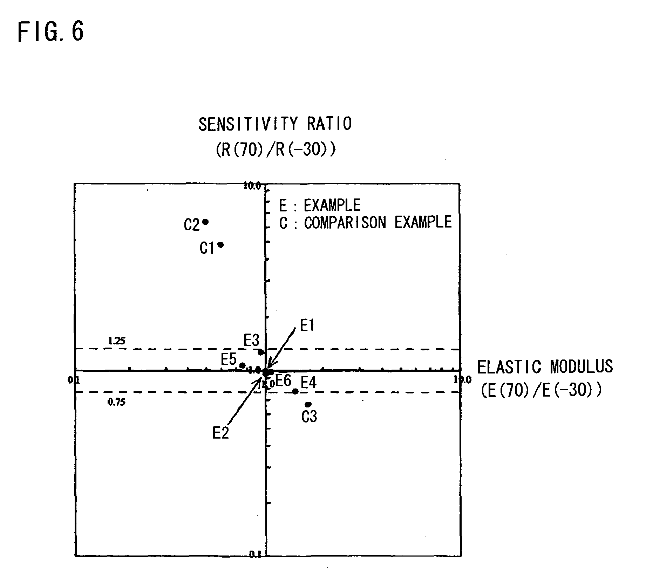

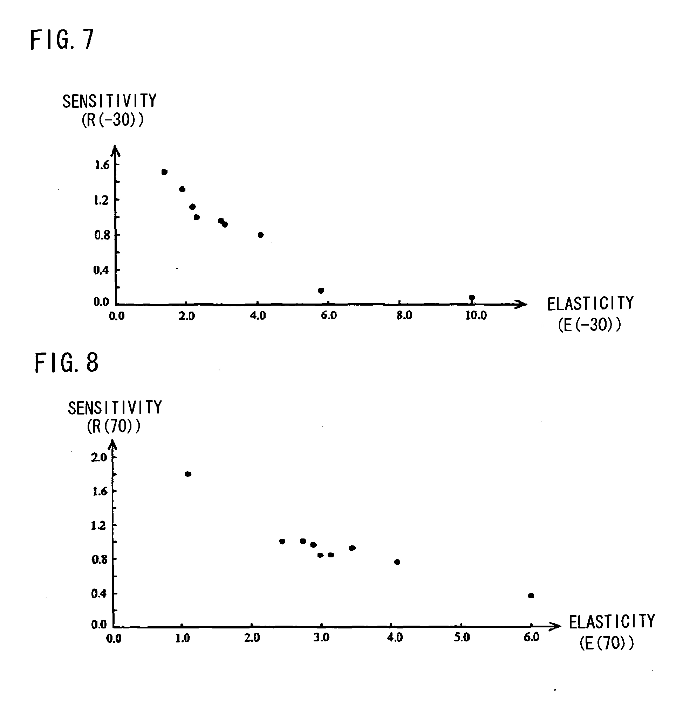

Table **1** shows results obtained from the optical fiber sensors of Examples **1-6** and Comparison examples **1-3. FIG.6** shows the correlation of the elastic modulus ratio versus the sensitivity ratio, **FIG.7** the correlation of the elastic modulus ratio at -**30**°C versus the sensitivity at -**30**°C, and **FIG.8** the correlation of the elastic modulus ratio at **70**°C versus the sensitivity at **70**°C.

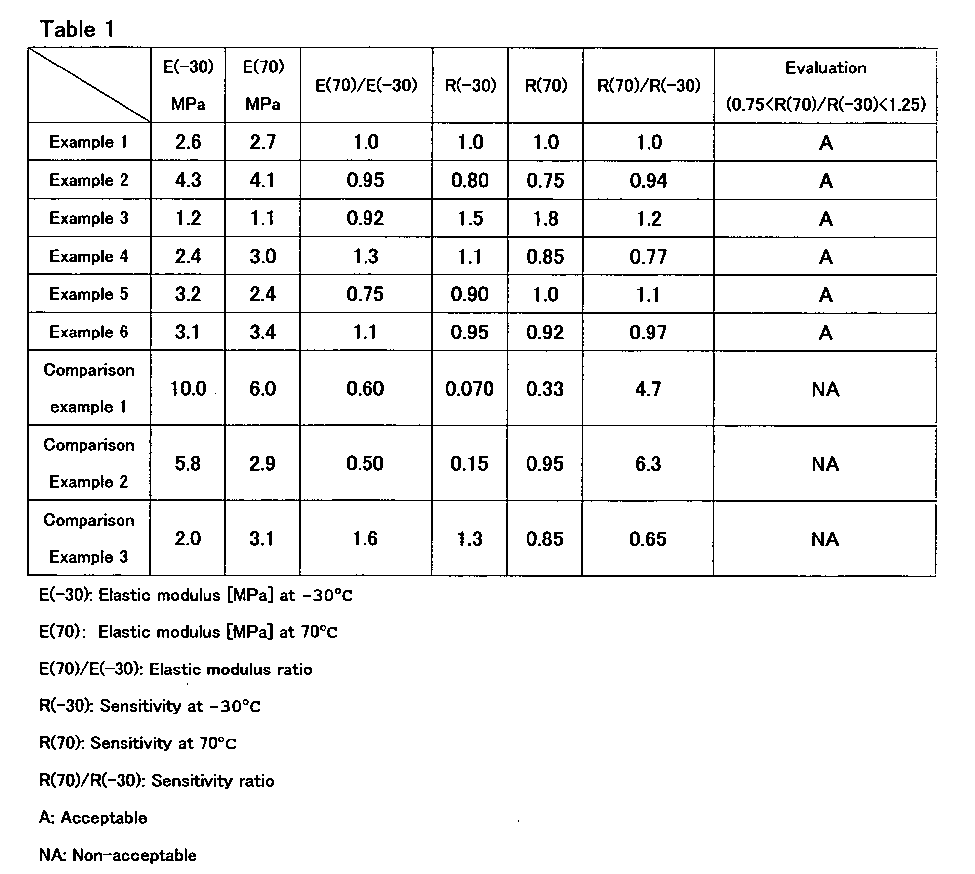

From the above results of Examples **1-6** and Comparison examples **1-3,** it is preferable, as the elastic material constituting the elastic structure **3,** that the ratio E(**70**)/E(-**30**) be close to **1** so that the sensitivity ratio approaches **1.** The preferred range of the ratio E(**70**)/E(-**30**) is **0.75-1.3** so that the sensitivity ranges **0.75-1.25.**

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth. The features disclosed in the foregoing description, in the claims and/or in the accompanying drawings may, both separately and in any combination thereof, be material for realising the invention in diverse forms thereof.

## Claims

1. An optical fiber impulse sensor, which passes light through an optical fiber and senses an impulse from an optical loss variation based on deformation of the optical fiber caused by the impulse, comprising:
the optical fiber formed of a synthetic resin,
a sheet member comprising a protrusion and disposed along a longitudinal direction of the optical fiber; and
an elastic structure that covers a periphery of the optical fiber and the sheet member, and comprises a E(**70**)/E(-**30**) ratio of a storage elastic modulus E(**70**) at **70**°C thereof to a storage elastic modulus E(-**30**) at -**30**°C thereof of **0.75** to **1.3**.

2. The optical fiber impulse sensor according to claim 1, wherein:
the elastic structure comprises any one or a mixture of a raw rubber and a synthetic rubber.

3. The optical fiber impulse sensor according to claim 1, wherein:
the elastic structure comprises a silicone rubber.

4. The optical fiber impulse sensor according to claim 1, wherein:
the elastic structure comprises a hole, and the optical fiber is inserted into the hole.

5. The optical fiber impulse sensor according to claim 3, wherein:
the hole is sealed at both ends of the elastic structure.

6. The optical fiber impulse sensor according to claim **1**, wherein:
the protrusion of the sheet member is in contact with the optical fiber.
